# EUROPÄISCHE PATENTSCHRIFT

(11) **EP 3 225 316 B1**
(45) Veröffentlichungstag und Bekanntmachung des Hinweises auf die Patenterteilung: **25.07.2018**
(21) Anmeldenummer: 16163514.9
(22) Anmeldetag: 01.04.2016
(51) Int. Cl.: B05C 11/10, B29B 13/02

(54) **VORRICHTUNG ZUM SCHMELZEN VON KLEBSTOFF**
APPARATUS FOR MELTING OF ADHESIVE
DISPOSITIF DESTINE A LA FONTE D'ADHESIF

(43) Veröffentlichungstag der Anmeldung: 04.10.2017
(73) Patentinhaber: Robatech AG, 5630 Muri (CH)
(72) Erfinder: Mösli, Urs, CH-8404 Winterthur (CH)
(74) Vertreter: Quermann, Helmut

(56) Entgegenhaltungen:
- EP-B1- 1 115 542
- FR-A1- 2 622 602
- US-A- 6 093 912

## Beschreibung

Die Erfindung betrifft eine Vorrichtung zum Schmelzen von Klebstoff, mit einem eine Vielzahl von Durchtrittsöffnungen aufweisenden Schmelzrost und mit Heizelementen, wobei der Schmelzrost mittels der Heizelemente aufheizbar ist und mittels des heißen Schmelzrosts geschmolzener Klebstoff durch die Durchtrittsöffnungen ableitbar ist, sowie der Schmelzrost auf dessen dem zu schmelzenden Klebstoff zugewandten Seite Rippen aufweist.

### Technisches Gebiet

In verschiedensten Industrien werden Schmelzklebstoffe eingesetzt, um Teile miteinander zu verbinden. Für das Aufbereiten und Zuführen von Klebstoff auf die verschiedensten Substrate stehen einfache Handgeräte oder automatisierte Auftragssysteme zur Verfügung.

In Herstellungsprozessen von Produkten werden sehr oft automatisierte Auftragssysteme eingesetzt. Die Auftragssysteme sind meistens auf den jeweiligen Herstellungsprozess von Produkten abgestimmt und bestehen aus Geräten und Maschinenteilen, die für den Prozess geeignet sind. Um die Ausführungsvarianten von Geräten klein zu halten, wird mit Standardgeräten gearbeitet, die dann in Kombination mit spezifischen Klebstoffauftragsköpfen oder Klebstoffauftragsaggregaten ein prozessoptimiertes System bilden.

Es wird beispielsweise ein Klebstoffauftragsgerät verwendet, das die folgenden Funktionen beinhaltet: Der zu schmelzende Klebstoff wird in einen Vorschmelztank eingelegt, oder über ein automatisches Zuführsystem, wie zum Beispiel einen Granulat-Förderer, zugeführt. In dem Vorschmelztank wird der noch feste Klebestoff aufgeheizt und dadurch verflüssigt. Der flüssige Klebstoff gelangt in einen zum Vorschmelztank gehörenden, anschließenden Vorratsbereich. Eine Förderpumpe fördert den flüssigen Klebstoff aus dem Vorratsbereich über einen Schlauch zu einem oder mehreren Klebstoffauftragsköpfen. In den Auftragsköpfen sind schaltbare Ventile angebracht, über welche durch Steuersignale der Klebstoffauftrag ein- und abgeschaltet werden kann. Wird anstelle der Auftragsköpfe ein Walzenauftragssystem eingesetzt, so wird ein Klebstoffschmelzgerät eingesetzt. Im Unterschied zum Klebstoffauftragsgerät wird der flüssige Klebstoff nicht den Klebstoffauftragsköpfen zugeführt, sondern in ein Vorratsbecken, in welchem sich Walzen drehen, gefördert. Im Vorratsbecken ist ein Füllstandssensor angebracht, der den Füllstand an Klebstoff überprüft. Bei Klebstoffbedarf meldet der Füllstandssensor diesen an die Steuerung des Klebstoffschmelzgeräts und das Gerät fördert flüssigen Klebstoff in das Vorratsbecken, bis der Füllstandssensor keinen Bedarf mehr meldet.

Im Klebstoffauftragsgerät und im Klebstoffschmelzgerät wird der Klebstoff durch Einwirkung von Wärme vom festen Zustand in den flüssigen Zustand gebracht. Je nach Klebstoff hat dieser im unbeheizten, festen Zustand unterschiedliche Lieferformen. Die Lieferformen können Granulat, Pellets oder kleine Blöcke sein. Es sind auch Kerzen mit einem Gewicht von 2, 3 oder 20 Kilogramm im Einsatz.

### Stand der Technik

In der EP 1 447 143 A2 ist eine Vorrichtung zum kontrollierten Bereitstellen von fließfähigem Medium beschrieben. Diese umfasst einen Behälter zur Aufnahme von Klebstoff und eine Schmelzvorrichtung zum Bewirken einer Temperaturerhöhung. Die Schmelzvorrichtung besitzt einen Austrittsbereich mit mindestens einem Durchlass für den fließfähigen Klebstoff. Wird die Schmelzvorrichtung beheizt, so schmilzt der direkt mit der Schmelzvorrichtung in Kontakt stehende Klebstoff und gelangt durch den mindestens einen Durchlass in den nachfolgenden Speicher. In der Praxis hat sich gezeigt, dass die Schmelzvorrichtung mit mehreren Durchlässen versehen sein muss, damit der flüssige Klebstoff gut abfließen kann, und die Durchlässe einen Durchmesser aufweisen müssen, der größer ist als der Korndurchmesser des Granulats. Dadurch ist die Vorrichtung schlecht geeignet für das Aufschmelzen von Klebstoff in Granulatform. Die Granulatkörper können ungeschmolzen durch die Durchlässe in einen Speicher gelangen und die Kontaktfläche von der Schmelzvorrichtung zum Granulat ist gering. Dies führt zu einer kleinen Schmelzrate. Für Klebstoffblocks oder Klebstoffkerzen ist zur Erhöhung der Schmelzrate eine Presse mit einer Folgeplatte vorgesehen. Der Einsatz der Presse mit der Folgeplatte erfordert einen Mehraufwand und macht die gesamte Vorrichtung teuer.

In der EP 2 650 095 A1 wird eine Heißleimschmelzvorrichtung mit einem Schmelzrost mit einer Vielzahl von Durchtrittsöffnungen zum Schmelzen von Heißleim vorgestellt. Die Durchtrittsöffnungen weisen eine Öffnungsweite auf, die der 0.3- bis 0.8-fachen Abmessung der kleinsten Granulatteilchen entspricht. Die Vorrichtung ist für das Aufschmelzen von Heißleim, der in Granulatform angeliefert wird, konzipiert. Die Anordnung einer ersten Heizeinrichtung im Außenbereich des Schmelzrostes schränkt die Wahl der Gesamtabmessung des Schmelzrosts ein. Die Wärme muss durch Wärmeleitung in den Schmelzrost eingebracht werden. Die Verwendung einer zweiten Heizeinrichtung im Zentrum des Schmelzrosts zeigt, dass die Wärmeleitung begrenzt ist und nur eine relativ kleine Schmelzrostfläche für das Schmelzen des Klebstoffs zur Verfügung steht. Dies mag für die vorgesehene Anwendung zum Verkleben von Filterpapier in Produkten der tabakverarbeitenden Industrie genügen. Für Klebstoffschmelz- oder Klebstoffauftragsgeräte, die Klebstoff in kleinen und auch großen Mengen aufschmelzen müssen, ist die Fläche des vorgestellten Schmelzrosts ungenügend.

Weiter ist das Aufschmelzen von Klebstoff in Form von Blöcken oder Kerzen nur bedingt realisierbar. Die zur Verfügung stehende Oberfläche, die mit dem Klebstoff in Kontakt treten kann, ist zu gering.

Aus der EP 1 115 542 B1 ist eine Vorrichtung der eingangs genannten Art bekannt. Die dort beschriebene Heißleimschmelzvorrichtung besitzt einen Schmelzrost, der mehrere sich abwärts erstreckende längliche Gitterelemente in Form von Rippen besitzt, die mit einem Heizelement thermisch verbunden sind. Ein Vorratsbehälter besitzt mehrere sich aufwärts erstreckende, als Rippen ausgebildete Wärmeübertragungselemente, die mit einem Heizelement verbunden sind. Die länglichen Gitterelemente greifen dabei in die sich aufwärts erstreckenden Wärmeübertragungselemente ein. Ferner besitzen die sich abwärts erstreckenden Gitterelemente weitere Rippen. Ein erster und ein zweiter Rippensatz zeigen nach oben und stehen zueinander im rechten Winkel. Dabei bilden sie eine Gitterstruktur mit Öffnungen, durch die der flüssige Klebstoff in den Vorratsbehälter fließen kann. Der erste und der zweite Rippensatz haben dabei eine unterschiedliche Höhe, sodass fester Klebstoff in der Form von Pellets, Blöcken oder Kerzen nicht beide Rippenenden gleichzeitig berührt, wenn er auf den Rippen zu liegen kommt. Dadurch dringen die höheren, beheizten Rippen schneller in den festen Klebstoff ein und ermöglichen dadurch eine hohe Schmelzrate auch bei diesen Klebstofflieferformen. Mit einem dritten Rippensatz greifen die länglichen Gitterelemente in die Wärmeübertragungselemente ein. Ein solcher Schmelzrost ist sehr aufwendig in der Herstellung. Dadurch entstehen hohe Gerätekosten. Dies stellt einen großen Nachteil der Vorrichtung dar. Zum anderen ist die Form des Schmelzrosts, wenn dieser in einer Heißleimschmelzvorrichtung eingebaut ist, unveränderbar. Für das Schmelzen von Klebstoff in Form von Granulat oder Pellets und in der Form von Blöcken oder Kerzen ist der Schmelzrost modifiziert, wenn eine hohe Schmelzrate erreicht werden soll. Somit kann mit der Heißleimschmelzvorrichtung nicht für alle Lieferformen des Klebstoffs eine hohe Schmelzrate erreicht werden.

### Erfindung

Aufgabe der vorliegenden Erfindung ist es, eine Vorrichtung der eingangs genannten Art so weiterzubilden, dass sie die Nachteile des vorstehend erörterten Standes der Technik eliminiert. Insbesondere soll es die Vorrichtung ermöglichen, die unterschiedlichsten Lieferformen von festem Klebstoff bei hoher spezifischer Schmelzrate aufzuschmelzen, ohne dass dabei der Klebstoff Schädigungen wegen zu starker thermischer Belastung erfährt.

Gelöst wird die Aufgabe durch eine Vorrichtung, die gemäß den Merkmalen des Patentanspruchs 1 ausgebildet ist. Bei der Vorrichtung zum Schmelzen von Klebstoff ist somit vorgesehen, dass diese einen eine Vielzahl von Durchtrittsöffnungen aufweisenden Schmelzrost und Heizelemente aufweist. Der Schmelzrost ist mittels der Heizelemente aufheizbar. Mittels des heißen Schmelzrosts geschmolzener Klebstoff ist durch die Durchtrittsöffnungen ableitbar. Der Schmelzrost weist auf dessen dem zu schmelzenden Klebestoff zugewandten Seite Rippen auf. Von besonderer Bedeutung ist es, dass der Schmelzrost nebeneinander angeordneten Stangen sowie an den Stangen angeordnete Rippen aufweist. Die Stangen und die Rippen sind mittels der Heizelemente aufheizbar. Die Rippen benachbarter Stangen sind aufeinander zu gerichtet. Durch Verdrehung von Stangen des Schmelzrosts sind die Durchtrittsquerschnitte der Durchtrittsöffnungen zwischen den Stangen veränderbar.

Die Querschnittsveränderung der Durchtrittsöffnungen wird bevorzugt dadurch bewerkstelligt, dass alle Stangen verdrehbar sind und verdreht werden. Grundsätzlich reicht es aber aus, betreffend jeweils zwei benachbart angeordnete Stangen, nur eine der Stangen zu verdrehen, um den Durchtrittsquerschnitt zwischen diesen Stangen zu verändern.

Die Vorrichtung weist somit veränderbare Durchtrittsquerschnitte des Schmelzrosts auf, womit es auf einfache Art und Weise möglich ist, den Schmelzrost und dessen Wärmeübertragung an die unterschiedliche Lieferform des Klebstoffs anzupassen.

Insbesondere erfolgt die Veränderung der Durchtrittsquerschnitte ausschließlich durch die Veränderung der Position der Rippen, die mit den unterschiedlichen Stangen verbunden sind, zueinander. Hierbei ist der Querschnitt der jeweiligen Stange rotationssymmetrisch, sodass die Verdrehung der Stange keinen Einfluss hat auf den Durchtrittsquerschnitt. Es wäre aber durchaus auch möglich, den Querschnitt der Stange nicht rotationssymmetrisch zu gestalten, sodass die Verdrehung der Stange mit zur Veränderung des Durchtrittsquerschnitts der Durchtrittsöffnungen beiträgt.

Die Anordnung von jeweiliger Stange und dieser zugeordneten Rippen ist baulich besonders einfach gestaltet und kostengünstig herstellbar, wenn die jeweilige Stange und die an dieser Stange angeordneten Rippen einteilig sind. Insbesondere handelt es sich bei diesem Bauteil um ein Gussteil aus Metall.

Gemäß einem bevorzugten Ausführungsbeispiel ist vorgesehen, dass die Drehachsen der Stangen parallel zueinander angeordnet sind. Dadurch lässt sich ein homogen unterteilter Schmelzrost bilden, bei einfacher Gestaltung und einfacher Funktionalität. Insbesondere sind die Stangen so zueinander angeordnet, dass die Drehachsen identische Abstände aufweisen.

Gleichfalls unter dem Aspekt optimaler konstruktiver Eigenschaften und günstiger Herstellung wird es als besonders vorteilhaft angesehen, wenn die Rippen der jeweiligen Stange sich senkrecht zur Drehachse dieser Stange erstrecken. Diese Anordnung der Rippen bezüglich der zugeordneten Stange ermöglicht es, auf einfachste Art und Weise, die Durchschnittsquerschnitte der Durchtrittsöffnungen definiert zu verändern.

Es ist insbesondere vorgesehen, dass die Rippen der jeweiligen Stange um die Stange umlaufend sind. Hierdurch ist, unabhängig von der jeweiligen Drehstellung der Stange, eine Führung des geschmolzenen Klebstoffs mittels der Rippen möglich und überdies sind die Rippen, unabhängig von der Drehstellung der Stange, immer in einem Teilbereich dem zu schmelzenden Klebestoff zugewandt.

Bevorzugt ist die jeweilige Rippe derart gestaltet, dass sie in einer ersten Richtung einen ersten Abstand zur Drehachse der zugeordneten Stange aufweist und in einer zweiten Richtung, senkrecht zur ersten Richtung, einen größeren zweiten Abstand zur Drehachse dieser Stange aufweist. Es ist somit eine Gestaltung darstellbar, bei der die jeweilige Rippe vier Rippensegmente aufweist, von denen zwei erste, entgegengesetzt angeordnete Rippensegmente jeweils größere radiale Erstreckungen bezüglich der zugeordneten Stange aufweisen als zwei zweite, gleichfalls entgegengesetzt zueinander angeordnete Rippensegmente, die senkrecht zu den ersten Rippensegmenten angeordnet sind. Diese Gestaltung ermöglicht es einerseits, die Durchtrittsquerschnitte der Durchtrittsöffnungen zwischen den Stangen auf einfache Art und Weise zu verändern, andererseits das Kontaktniveau der Rippen am zu schmelzenden Klebstoff, bezogen auf die Vertikale, zu verändern. Dieses hat Einfluss auf die Schmelz- und Durchflussrate des Klebstoffs.

Vorzugsweise weist die jeweilige Rippe mehrere, insbesondere vier nach radial außen gekrümmte Rippenenden auf. Es wird ferner als vorteilhaft angesehen, wenn die jeweilige Rippe, in einem Verbindungsbereich mit der dieser zugeordneten Stange, eine maximale Stärke in Richtung der Drehachse der Stange aufweist, insbesondere sich in Richtung der Stange konisch erweitert. Die vorgenannten Ausgestaltungen tragen zur Optimierung des Aufschmelzens des Klebstoffs bei.

Es wird als besonders vorteilhaft angesehen, wenn die Rippen benachbarter Stangen um einen halben Rippenabstand versetzt angeordnet sind. Dadurch ist es möglich, die Stangen so anzuordnen, dass die langen Rippensegmente ineinandergreifen und so einen definierbaren Durchgang zwischen den Rippen bilden. Durch diesen Durchgang kann der flüssige Klebstoff abgeleitet werden, insbesondere in einen Vorratsbereich eines Vorschmelztanks. Die Durchgangsgröße definiert die maximal zulässige Festkörpergröße des Klebstoffs, der den Schmelzrost passieren kann. Zur Erreichung einer hohen Schmelz- und Durchflussrate benötigt Klebstoff der im geschmolzenen Zustand eine sehr hohe Viskosität aufweist, eine andere Durchgangsgröße als ein Klebstoff mit kleiner Viskosität.

Die Stangen sind, je nach Automatisierungsgrad und Anforderungen, manuell oder maschinell verdrehbar. Vorzugsweise ist vorgesehen, dass Stangen, insbesondere alle Stangen, gekoppelt identisch verdrehbar sind. Die Verdrehung einer Stange um einen definierten Winkel führt somit zu einer identischen Verdrehung der anderen Stangen.

Vorzugsweise sind die Stangen derart verdrehbar, dass in einer ersten Endstellung der jeweiligen Stange deren Rippen, bezogen auf deren vorgenannte zweite Richtung horizontal angeordnet sind und in einer zweiten Endstellung dieser Stange deren Rippen, bezogen auf deren vorgenannte zweite Richtung, vertikal angeordnet sind. In der ersten Endstellung ergeben sich somit relativ geringe Durchtrittsquerschnitte der Durchtrittsöffnungen zwischen den Stangen und in der zweiten Endstellung relativ große Durchtrittsquerschnitte der Durchtrittsöffnungen zwischen den Stangen.

Vorzugsweise sind die Stangen in definierten Drehstellungen festlegbar. Hierdurch wird verhindert, dass die Stangen und damit die Rippen insbesondere unter Einwirkung der Gewichtskraft des zu schmelzenden Klebstoffs aus den definierten Drehstellungen verdreht werden.

Bei der Vorrichtung zum Schmelzen von Klebstoff wird es ferner als vorteilhaft angesehen, wenn diese einen Behälter mit in diesem angeordneten Schmelzrost aufweist, wobei eine Durchtrittsöffnung zwischen einer seitlichen Behälterwand und der dieser benachbarten Anordnung von Stange und Rippen mittels einer Abdeckung abdeckbar ist oder die seitliche Behälterwand mit auf diese Stange zugeordneten Rippen versehen ist. Hierdurch ist der Durchgang zwischen der äußersten Stange und deren Rippen sowie der Seitenwand reduziert.

Unter dem Aspekt einer optimalen Aufheizung des Schmelzrosts bei einfacher Gestaltung wird es als vorteilhaft angesehen, wenn die Stangen die Heizelemente aufnehmen und das Aufheizen der Rippen durch Wärmeleitung über die Stangen erfolgt. Es wird ferner als vorteilhaft angesehen, wenn mit einer Steuerung verbundene Temperaturfühler vorgesehen sind, die die Temperaturen der Stangen erfassen und diese thermisch optimal regeln, um eine thermische Überlastung des Klebstoffs zu vermeiden.

Bei einfachster Ausbildung sind die Stangen in einer geraden Ebene angeordnet. Es sind durchaus abweichende Gestaltungen möglich, insbesondere die Anordnung der Stangen in einer geknickten Ebene oder einer gewölbten Ebene. Insbesondere ist vorgesehen, dass bei geknickter oder gewölbter Ebene diese zentral nach unten gewölbt angeordnet ist.

Unter dem Aspekt der beschriebenen Vorrichtung zum Schmelzen von Klebstoff einschließlich der erörterten Weiterbildungen wird es somit als besonders vorteilhaft angesehen, wenn, bei entsprechender Verdrehstellung der Stangen, die Rippen der einen Stange jeweils auf die Rippen der anderen Stange zugerichtet sind und hierbei die Rippen der jeweils benachbarten Stangen miteinander kämmen, derart, dass zwischen den Rippen der Stangen ein Abstand gebildet ist, somit eine Durchtrittsöffnung, die aus einer Vielzahl hintereinander angeordneter, periodisch wiederkehrender Teillängen gebildet ist. Hierdurch wird der Durchtrittsquerschnitt dieser Durchtrittsöffnung gebildet. Werden die benachbarten Stangen aus dieser Ausgangsstellung relativ zueinander verdreht, führt dies dazu, dass die zusammenwirkenden Rippen der benachbarten Stangen entsprechend dem gewählten Drehwinkel weniger überlappen, womit der Durchtrittsquerschnitt vergrößert wird. Durch relative Verdrehung der Stangen zueinander kann ein Zustand erreicht werden, in dem die Rippen benachbarter Stangen überhaupt nicht mehr ineinandergreifen, womit ein besonders großer Durchtrittsquerschnitt der Durchtrittsöffnung gebildet ist. Der jeweilige zu wählende Durchtrittsquerschnitt der Durchtrittsöffnung wird auf die Lieferform, somit die Form des unbeheizten, festen Klebstoffs abgestimmt, insbesondere die Lieferform Granulat, Pellets, kleine Blöcke oder Kerzen.

Ein wesentlicher Vorteil ist die Ausbildung des Schmelzrostes. Durch die Möglichkeit, Stangen mit den Rippen zu verdrehen, kann die Öffnung des Durchgangs verändert werden. Ein kleiner Durchgang im Zusammenspiel der Rippen ist für Lieferformen von Klebstoff in der Form von Pellets oder Granulat vorteilhaft. Ein größerer Durchgang ist für Lieferformen in Blöcken oder Kerzen erforderlich, um eine hohe Schmelzleistung zu erreichen.

Die Veränderbarkeit des Durchgangs am Schmelzrost ermöglicht es, Klebstoffe, welche im flüssigen Zustand eine sehr hohe Viskosität aufweisen und Klebstoffe, die im flüssigen Zustand eine niedrige Viskosität aufweisen, ohne den Austausch des Schmelzrosts bei hoher Schmelzrate zu verarbeiten.

Durch ein Verdrehen der Stangen stehen die Rippen anders zum festen Klebstoff. Dadurch kann die Rippenoberfläche, die in einen festen Körper einschmelzen muss, schneller wirken und der feste Klebstoffkörper wird schneller verflüssigt als bei einer Rippenanordnung, die optimal für Pellets oder Granulat ist.

Die Stangen werden durch Heizelemente im Zentrum der Stange aufgeheizt und leiten die Heizenergie über die Rippen in den Klebstoff ein. Ein Temperaturmessfühler erfasst die aktuelle Temperatur der Stangen. Die Steuerung sorgt dafür, dass die Temperatur der Stange den vorgegebenen Wert nicht überschreitet und den Klebstoff nicht übermäßig belastet. Die Temperatur der jeweiligen Stange wird durch die Steuerung, abhängig vom Klebstoffverbrauch, Klebstoff, Viskosität des flüssigen Klebstoffs, Einstellungen des Bedieners und vom Betriebsstatus des Geräts verschieden gewählt.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen erfindungswesentlich sind.

### Figurenbeschreibung

In den Figuren ist die Erfindung anhand bevorzugter Ausführungsbeispiele in schematischer Darstellung veranschaulicht, ohne auf diese beschränkt zu sein. Es zeigt:
- Fig. 1: ein Klebstoffauftragsgerät, das mit einem Schmelzrost versehen ist, veranschaulicht in einem Vertikalschnitt, wobei das Klebstoffauftragsgerät mit Klebstoff in der Form von Granulat bestückt ist,
- Fig. 2: ein Klebstoffschmelzgerät, das mit einem Schmelzrost versehen ist, veranschaulicht in einem Vertikalschnitt, wobei das Klebstoffschmelzgerät mit Klebstoff in Blockform bestückt ist,
- Fig. 3: den bei den Geräten nach Fig. 1 und 2 verwendeten Schmelzrost, in einer Draufsicht, von der Beschickungsseite gesehen,
- Fig. 4: einen Schnitt A-A gemäß Fig. 3,
- Fig. 5: einen Schnitt B-B gemäß Fig. 4,
- Fig. 6: eine perspektivische Sicht auf den Schmelzrost in Verbindung mit einem demontierbaren Seitenwanddeckel des Geräts,
- Fig. 7: eine perspektivische Sicht eines Teilbereichs des Geräts, vertikal geschnitten durch die Achse einer der Stangen des Schmelzrosts.

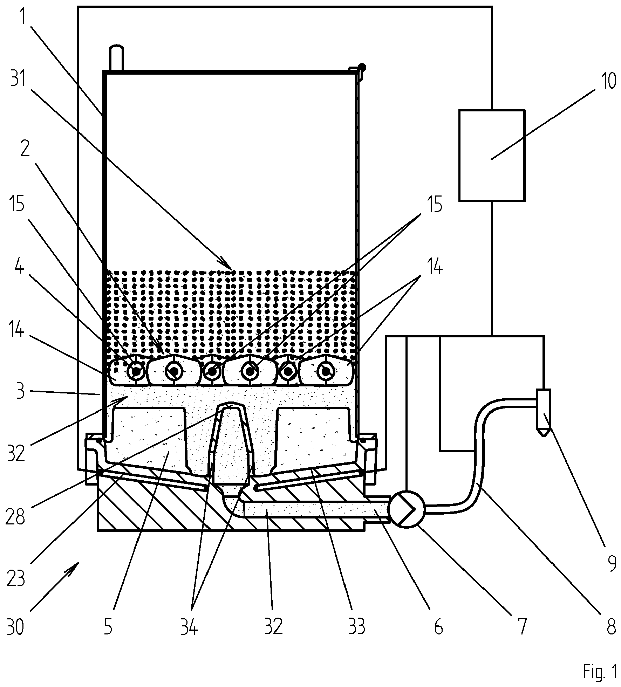

Fig. 1 zeigt den prinzipiellen Aufbau einer Vorrichtung 30 zum Schmelzen von Klebstoff, wobei es sich bei dieser Vorrichtung um ein Klebstoffauftragsgerät handelt. Der zu verarbeitende Klebstoff 31, vorliegend ein Granulat, beispielsweise ein EVA-Granulat, wird von Hand in einen Vorschmelztank 1 eingelegt oder über ein automatisches Zuführsystem, wie zum Beispiel einen Granulatförderer, zugeführt. In dem Vorschmelztank 1 wird der noch feste Klebstoff aufgeheizt und dadurch verflüssigt. Dazu besitzt der Vorschmelztank 1 einen Schmelzrost 2, der durch Heizelemente 4 aufgeheizt werden kann und so den festen Klebstoff von unten her aufheizt und damit verflüssigt. Die Gewichtskraft des Klebstoffs 31 drückt diesen gegen den Schmelzrost 2 und ermöglicht so immer einen Kontakt mit Rippen 14 des Schmelzrosts 2. Der flüssige Klebstoff 32 und teilweise kleine, nicht geschmolzene Klebstoffteile gelangen in einen zum Vorschmelztank 1 gehörenden, anschließenden Vorratsbereich 3. Der Vorratsbereich 3 wird durch Heizelemente 23 beheizt, sodass der flüssige Klebstoff 32 auf die für die weitere Verarbeitung optimale Temperatur gebracht und gehalten werden kann. Damit der Klebstoff im Vorratsbereich 3 gleichmäßig mit Wärmeenergie versorgt wird, sind im Vorratsbereich 3 Rippen 5 angebracht, die mit den Heizelementen 23 wärmeverbunden sind. Durch diese großzügigen Rippen 5 ist es zulässig, dass im obersten Teil des Vorratsbereichs 3 kleine, noch nicht vollständig geschmolzene Klebstoffteile aufgenommen werden können. Sie werden dann auf ihrem weiteren Weg zu einen Boden 33 und einem Auslauf im Kanal 6 der Vorrichtung 30 vollständig geschmolzen und auf die vorgesehene Verarbeitungstemperatur gebracht. Es ist dabei wichtig, dass die kleinen ungeschmolzenen Klebstoffteile ein einzelnes Korn oder Körner bilden. Klebstoffteile aus mehreren Körnern, die zusammenkleben und gleichzeitig noch Luft einschließen, haben einen schlechteren Wärmeübergang und dürfen deshalb dem Vorratsbereich 3 nicht zugeführt werden.

Damit auch im mittleren Teil des Vorratsbereichs 3 der Weg für die ungeschmolzenen Klebstoffteile, für ihr vollständiges Aufschmelzen, genügend lang ist, ist im Zentrum eine domartige Abdeckung 28 eingebaut. Im unteren Bereich der Abdeckung 28 sind Öffnungen 34 angebracht, durch die der flüssige Klebstoff dann zum Auslaufkanal 6 gelangen kann.

Vom Auslaufkanal 6 gelangt der flüssige Klebstoff 32 zu mindestens einer Förderpumpe 7. Die mindestens eine Förderpumpe 7 fördert den flüssigen Klebstoff aus dem Vorratsbereich 3 über einen beheizbaren Schlauch 8 zu einem oder mehreren Auftragsköpfen 9. In den Auftragsköpfen 9 sind schaltbare Ventile angebracht, über welche durch Steuersignale der Klebstoffauftrag ein- und abgeschaltet werden kann.

Diese Ventile können durch eine Steuerung 10 des Klebstoffauftragsgeräts, oder durch eine Steuerung, die zur Produktionsmaschine gehört, angesteuert werden. Damit die Klebstoffförderleistung des Klebstoffauftragsgeräts optimal an den erforderlichen Klebstoffbedarf der Maschine angepasst werden kann, ist das Gerät modular aufgebaut. Es ist möglich, bei jedem Gerät mehrere Förderpumpen 7 einzusetzen. Es werden mehrere Größen des Vorschmelztanks 1 angeboten. Der dazu benötigte Schmelzrost 2 lässt sich einfach an die erforderliche Größe anpassen, indem mehr oder weniger Elemente eingesetzt werden.

Die Steuerung 10 ist mit den Heizelementen 4, 23 für den Schmelzrost 2 und den Vorratsbereich 3, den Förderpumpen 7, Schläuchen 8 und Heizelementen der Auftragsköpfe 9 verbunden. Sie regelt die vorgegebenen Temperaturen an den Heizelementen und sie steuert die Förderpumpen entsprechend dem erforderlichen Klebstoffbedarf.

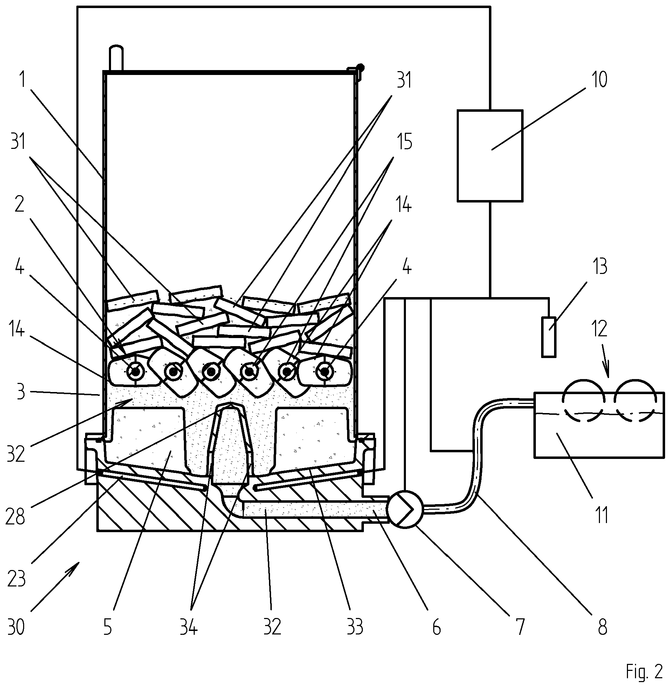

Fig. 2 zeigt in einer bezüglich Fig. 1 vergleichbaren Darstellung den Aufbau einer Vorrichtung 30, die als Klebstoffschmelzgerät ausgebildet ist. Das Gerät ist grundsätzlich gleich aufgebaut wie das Klebstoffauftragsgerät, erst nach der Förderpumpe 7 besteht ein Unterschied. Es wird deshalb auf eine Beschreibung der Funktion im gleichen Bereich verzichtet. Mit dem Klebstoffschmelzgerät werden keine Auftragsköpfe 9 bedient, sondern es wird flüssiger Klebstoff 32 in ein Vorratsbecken 11 gefördert. Dieses ist Teil eines Walzenauftragssystems 12, das Bestandteil der Produktionsmaschine ist. Die Walzenauftragssysteme sind auf die Bedürfnisse der Produktionsmaschine abgestimmt und haben in der Regel für die verschiedenen Produktionsprozesse unterschiedliche Ausführungsformen.

Im Vorratsbecken 11 ist ein Füllstandssensor 13 angebracht, der den Füllstand an flüssigem Klebstoff 32 überprüft. Bei Klebstoffbedarf meldet der Füllstandssensor 13 Klebstoffbedarf an die Steuerung 10 des Klebstoffschmelzgeräts und das Gerät fördert flüssigen Klebstoff in das Vorratsbecken 11, bis der Füllstandssensor 13 keinen Bedarf mehr meldet. Auch bei diesem Gerät ist es möglich, mehrere Förderpumpen 7 und Gerätegrößen zu verwenden. Damit können mehrere Vorratsbecken unabhängig voneinander befüllt werden.

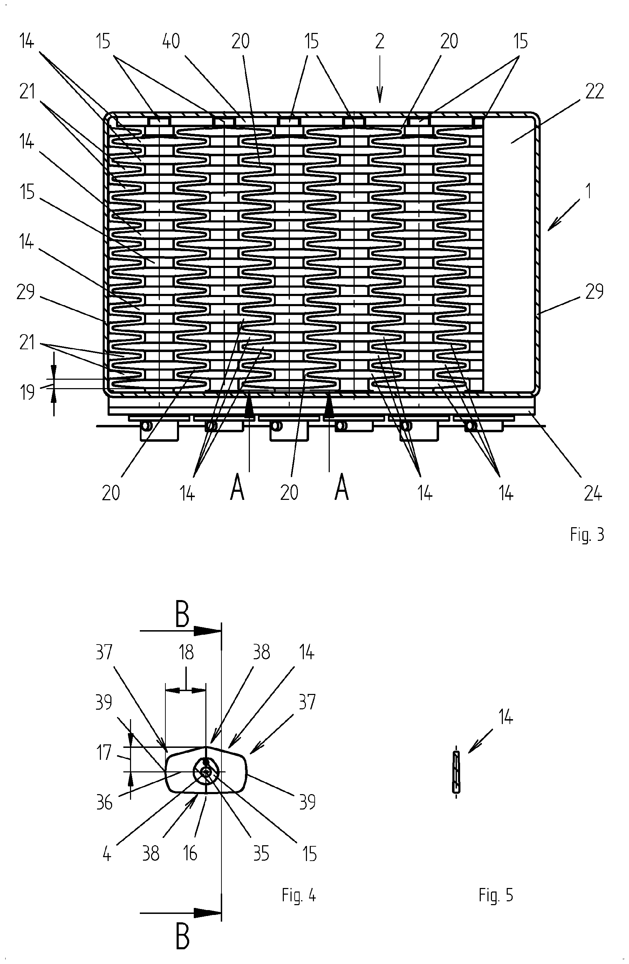

In den Fig. 3 bis 6 ist die Gestaltung und Anordnung des Schmelzrosts 2 gezeigt. Der Schmelzrost 2 besteht im Wesentlichen aus mit Rippen 14 versehenen Stangen 15, die nebeneinander angeordnet sind und so einen Rost bilden, der den festen Klebstoff 31 abstützt. Die Rippen 14 haben in einer ersten Richtung, veranschaulicht durch die Erstreckung der Linie 16, einen ersten Abstand 17 zur Drehachse 35 und in einer rechtwinklig zur ersten Richtung gesehenen zweiten Richtung, veranschaulicht durch die Erstreckung der Linie 36, einen zweiten, wesentlich größeren Abstand 18 zur Drehachse 35. Die Dimension im Zentrum der Stange 15, über die beiden Rippenenden der ersten Richtung gemessen, ist dabei die größte Abmessung der Rippe 14 in dieser Richtung. Die jeweilige Rippe 14 weist somit vier Rippensegmente auf, von denen jeweils zwei Rippensegmente identisch sind und ein Segmentpaar lang und das andere Segmentpaar relativ kürzer ist. Die langen Rippensegmente sind mit der Bezugsziffer 37, die kurzen Rippensegmente mit der Bezugsziffer 38 bezeichnet. Die Dimension im Zentrum der Stange 15, über die beiden Rippenenden der ersten Richtung gemessen, ist dabei die größte Abmessung der Rippe 14 in dieser Richtung. Gegen das Rippenende der rechtwinklig dazu liegenden längeren Rippensegmente wird diese Dimension in der ersten Richtung kleiner. Das Rippenende des jeweiligen langen Rippensegments 37 endet mit einem Bogenabschluss 39. Die jeweilige Rippe 14 hat die größte Rippendicke 19 im Bereich der Stange 15. Zum äußeren Ende der Rippe 14 verringert sich deren Dicke. Wie der Fig. 5 zu entnehmen ist, ist die Rippendicke in der ersten Richtung zusätzlich konisch und wird, bezogen auf die dargestellte Orientierung bei horizontaler Anordnung der Linie 36, nach unten dicker.

Die jeweilige Stange 15 ist mit mehreren solcher Rippen 14, somit mit mehreren identischen Rippen 14 versehen. Diese sind in derselben Orientierung bezüglich der Stange 15 angeordnet. Bei den Rippen 14 und der Stange 15 kann es sich um ein Bauteil handeln, insbesondere ein Gussteil aus Metall. Die Drehachsen 35 der Stangen 15 sind parallel zueinander angeordnet und liegen in einer gemeinsamen Ebene. Der Abstand benachbarter Stangen 15 ist gleich. Dabei sind die Rippen 14 von Stangen 15, die nebeneinander liegen, um einen halben Abstand versetzt, wie dies insbesondere der Darstellung der Fig. 3 zu entnehmen ist. Dadurch ist es möglich, die Stangen 15 so anzuordnen, dass, bei einer Orientierung der Stangen 15 gemäß der Darstellung in den Fig. 3 und 4, die langen Rippensegmente 37 ineinandergreifen und so eine definierbare Durchtrittsöffnung 20 im Sinne eines Durchgangs zwischen den Rippen 14 bilden. Durch diese Durchtrittsöffnung 20, die in der Draufsicht gemäß Fig. 3 sich als Spalt mit periodisch wiederkehrenden Spaltabschnitten darstellt, kann der flüssige Klebstoff 32 in den Vorratsbereich 3 des Vorschmelztanks 1 gelangen. Die Durchgangsgröße definiert die maximal zulässige Festkörpergröße des Klebstoffs, der den Schmelzrost 2 passieren kann. Zur Erreichung einer hohen Schmelz- und Durchflussrate benötigt ein Klebstoff, der im geschmolzenen Zustand eine sehr hohe Viskosität aufweist, eine andere Durchgangsgröße als ein Klebstoff mit kleiner Viskosität.

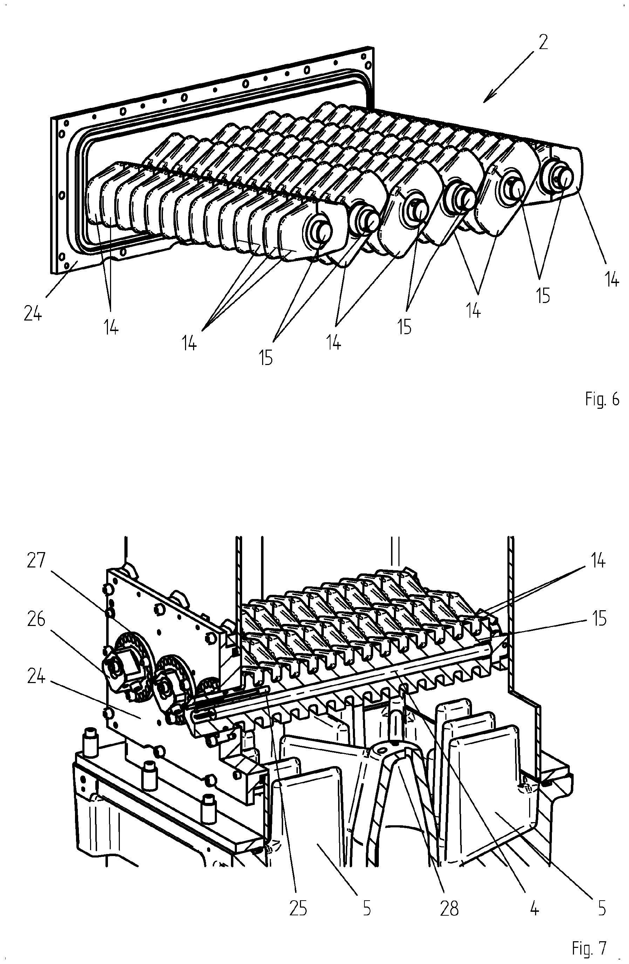

Die Stangen 15 sind an einer Seitenwand 40 des Vorschmelztanks 1 und in einem demontierbaren Seitenwanddeckel 24 der gegenüberliegenden Seitenwand des Vorschmelztanks 1 gelagert. Dadurch können die Stangen 15 verdreht und damit die Durchtrittsquerschnitte der Durchtrittsöffnungen 20 zwischen den Stangen 15 und auch den Rippen 14 verändert werden. Weiter wird durch das Verdrehen der jeweiligen Stange 15 der Kontakt der Rippen 14 zum festen Klebstoff 31 verändert. In der Fig. 6 ist eine Verdrehung der mittleren Stangen 15 um ca. 30° gezeigt. Dadurch verändert sich die Rippenform, die in den festen Klebstoffkörper 31 eindringt, wenn dieser geschmolzen wird, indem die vertikale Distanz vom Zentrum der Stangen 15 bis zum obersten Punkt der jeweiligen Rippe 14 vergrößert wird. Diese Stellung der Rippen 14 eignet sich für das Schmelzen von Klebstoffformen aus Blöcken oder Kerzen besser als die Stellung in der Horizontallage der langen Rippensegmente 37, wie es in den Fig. 3 und 4 und auch für die beiden äußeren Stangen gemäß Fig. 6 gezeigt ist. Die Stellung der Stangen 15 in Horizontallage der langen Rippensegmente 37 eignet sich ausgezeichnet für das Aufschmelzen von Granulat oder Pellets.

An den Seitenwänden 29 des Vorschmelztanks 1 parallel zu den Drehachsen 35 ist der Durchgang zwischen den Rippen 14 der jeweiligen äußersten Stange 15 und der zugeordneten Seitenwand 29 ebenfalls reduziert. Dazu eignen sich verschiedene Konstruktionen. So kann beispielsweise als kostengünstige Ausführung eine einfache Blechabdeckung 22 eingesetzt werden. Etwas aufwendiger ist es, Rippen 21 an den Seitenwänden 29 anzubringen, welche, wenn sie zusätzlich beheizt werden, die volle Schmelzrostfläche nutzbar machen.

Die Stangen 15 mit den Rippen 14 werden durch das Heizelement 4 im Zentrum der Stange 15 beheizt. Ein Temperaturmessfühler 25 erfasst die Temperatur der Stange 15 und meldet diese der Steuerung 10. Die Steuerung 10 sorgt dafür, dass die Temperatur der Stange 15 so geregelt wird, dass der mit den Rippen 14 der Stange 15 in Kontakt kommende Klebstoff niemals überhitzt und dadurch beschädigt wird. Die Temperatur der Stange 15 wird abhängig vom Klebstoffverbrauch, Klebstoff, Viskosität des flüssigen Klebstoffs, Einstellung des Bedieners und vom Betriebsstatus des Geräts verschieden gewählt.

In einer ersten möglichen Ausführungsform sind die Stangen 15 auf der Seite des demontierbaren Seitenwanddeckels 24 mit einem Vierkant 26 versehen. Über diesen Vierkant 26 wird ein Flansch 27 gesteckt, der mit mehreren Bohrungen versehen ist. Selbstverständlich können hier auch alle anderen bekannten Verbindungsmöglichkeiten zwischen Welle und Flansch eingesetzt werden. Mit Schrauben wird der Flansch 27 gegenüber dem Seitenwanddeckel 24 befestigt, sodass verschiedene Winkellagen für die Stangen 15 gewählt werden können. Durch Entfernen der Schrauben und Verdrehen des Flansches 27 lässt sich die Winkellage der Stange 15 leicht ändern.

In einer weiteren möglichen Ausführungsform wird die Verdrehung der Winkellage der Stangen automatisiert. Dadurch könnte beispielsweise der Flansch als Zahnrad ausgebildet sein. Über den Zahnrädern ist eine Zahnstange angeordnet, welche durch einen Getriebemotor in Längsrichtung verschoben wird und damit eine Drehbewegung der Zahnräder und dadurch der Stangen bewirken kann. Die Steuerung, die Informationen zur Klebstofflieferform und zum Klebstoff, der verarbeitet wird, kennt, kann dadurch die optimale Einstellung der Winkellage der Stangen automatisch vornehmen.

Der Schmelzrost 2 muss nicht zwingend in der dargestellten beschriebenen Art als Horizontalrost ausgeführt sein. Er könnte durchaus geneigt angeordnet sein, auch geknickt oder gewölbt, insbesondere in einem zentralen Bereich nach unten geknickt oder gewölbt. Auch sind Ausführungsformen mit mehreren Schmelzrosten übereinander denkbar.

### Bezugszeichenliste

1 Vorschmelztank
2 Schmelzrost
3 Vorratsbereich
4 Heizelement
5 Rippe
6 Auslaufkanal
7 Förderpumpe
8 Beheizbarer Schlauch
9 Auftragskopf
10 Steuerung
11 Vorratsbecken
12 Walzenauftragssystem
13 Füllstandsensor
14 Rippe
15 Stange
16 Linie
17 Erster Abstand
18 Zweiter Abstand
19 Rippendicke
20 Durchtrittsöffnung
21 Rippe
22 Blechabdeckung
23 Heizelement
24 Seitenwanddeckel
25 Temperaturmessfühler
26 Vierkant
27 Flansch
28 Domartige Abdeckung
29 Seitenwand
30 Vorrichtung
31 Klebstoff fest
32 Klebstoff flüssig
33 Boden
34 Öffnung
35 Drehachse
36 Linie
37 Langes Rippensegment
38 Kurzes Rippensegment
39 Bogenabschluss
40 Seitenwand

## Patentansprüche

1. Vorrichtung (30) zum Schmelzen von Klebstoff, mit einem eine Vielzahl von Durchtrittsöffnungen (20) aufweisenden Schmelzrost (2) und mit Heizelementen (4), wobei der Schmelzrost (2) mittels der Heizelemente (4) aufheizbar ist und mittels des heißen Schmelzrosts (2) geschmolzener Klebstoff (32) durch die Durchtrittsöffnungen (20) ableitbar ist, sowie der Schmelzrost (2) auf dessen dem zu schmelzenden Klebstoff (31) zugewandten Seite Rippen (14) aufweist, wobei der Schmelzrost (2) nebeneinander angeordnete Stangen (15) sowie an den Stangen (15) angeordnete Rippen (14) aufweist, sowie die Stangen (15) und die Rippen (14) mittels der Heizelemente (4) aufheizbar sind, wobei Rippen (14) benachbarter Stangen (15) aufeinander zu gerichtet sind, **dadurch gekennzeichnet, dass** durch Drehung von Stangen (15) des Schmelzrosts (2) die Durchtrittsquerschnitte der Durchtrittsöffnungen (20) zwischen den Stangen (15) veränderbar sind.

2. Vorrichtung nach Anspruch 1, **dadurch gekennzeichnet, dass** die jeweilige Stange (15) und die an dieser Stange (15) angeordneten Rippen (14) einteilig sind.

3. Vorrichtung nach Anspruch 1 oder 2, **dadurch gekennzeichnet, dass** die Drehachsen (35) der Stangen (15) parallel zueinander angeordnet sind.

4. Vorrichtung nach Anspruch 2 oder 3, **dadurch gekennzeichnet, dass** die Rippen (14) der jeweiligen Stangen (15) sich senkrecht zur Drehachse (35) dieser Stange (15) erstrecken.

5. Vorrichtung nach einem der Ansprüche 1 bis 4, **dadurch gekennzeichnet, dass** die Rippen (14) der jeweiligen Stangen (15) um die Stangen (15) umlaufend sind.

6. Vorrichtung nach einem der Ansprüche 1 bis 5, **dadurch gekennzeichnet, dass** die jeweilige Rippe (14) derart gestaltet ist, dass sie in einer ersten Richtung einen ersten Abstand (17) zur Drehachse (35) der zugeordneten Stange (15) aufweist und in einer zweiten Richtung, senkrecht zur ersten Richtung, einen größeren, zweiten Abstand (18) zur Drehachse (35) dieser Stange (15) aufweist.

7. Vorrichtung nach einem der Ansprüche 1 bis 6, **dadurch gekennzeichnet, dass** die jeweilige Rippe (14) mehrere, insbesondere vier nach radial außen gekrümmte Rippenenden aufweist.

8. Vorrichtung nach einem der Ansprüche 1 bis 7, **dadurch gekennzeichnet, dass** die jeweilige Rippe (14) in einem Verbindungsbereich mit der dieser zugeordneten Stange (15) eine maximale Stärke in Richtung der Drehachse (35) der Stange (15) aufweist, insbesondere sich in Richtung der Stange (15) konisch erweitert.

9. Vorrichtung nach einem der Ansprüche 1 bis 8, **dadurch gekennzeichnet, dass** die Rippenanordnung einer Stange (15) und die Rippenanordnung der dieser Stange (15) benachbarten Stange (15) derart ist, dass die jeweilige Rippe (14) der einen Stange (15) in einen zwischen zwei benachbarten Rippen (14) der anderen Stange (15) gebildeten Zwischenraum eingreift, insbesondere die Rippen (14) benachbarter Stangen (15) um einen halben Rippenabstand versetzt angeordnet sind.

10. Vorrichtung nach einem der Ansprüche 1 bis 9, **dadurch gekennzeichnet, dass** Stangen (15), insbesondere alle Stangen(15) des Schmelzrosts (2), verdrehbar sind, insbesondere gekoppelt identisch verdrehbar sind.

11. Vorrichtung nach einem der Ansprüche 6 bis 10, **dadurch gekennzeichnet, dass** die Stangen (15) derart verdrehbar sind, dass in einer ersten Endstellung der jeweiligen Stange (15) deren Rippen (14), bezogen auf deren zweite Richtung horizontal angeordnet sind und in einer zweiten Endstellung dieser Stange (15) deren Rippen (14), bezogen auf deren zweite Richtung, vertikal angeordnet sind.

12. Vorrichtung nach einem der Ansprüche 1 bis 11, **dadurch gekennzeichnet, dass** die Stangen (15) in definierten Drehstellungen festlegbar sind.

13. Vorrichtung nach einem der Ansprüche 1 bis 12, **dadurch gekennzeichnet, dass** sie einen Behälter (1) mit in diesem angeordneten Schmelzrost (2) aufweist, wobei eine Durchgangsöffnung zwischen einer seitlichen Behälterwand (29) und der dieser benachbarten Anordnung von Stange (15) und Rippen (14) mittels einer Abdeckung (22) abdeckbar ist oder die seitliche Behälterwand (29) mit auf diese Stange 15 zugerichteten Rippen (21) versehen ist.

14. Vorrichtung nach einem der Ansprüche 1 bis 13, **dadurch gekennzeichnet, dass** die Stangen (15) die Heizelemente (4) aufnehmen und das Aufheizen der Rippen (14) durch Wärmeleitung über die Stangen (15) erfolgt, sowie mit einer Steuerung (10) verbundene Temperaturmessfühler (25) vorgesehen sind, die die Temperaturen der Stangen (15) erfassen.

15. Vorrichtung nach einem der Ansprüche 1 bis 4, **dadurch gekennzeichnet, dass** die Stangen (15) in einer geraden Ebene oder einer geknickten Ebene oder einer gewölbten Ebene, insbesondere in einer zentral nach unten geknickten oder zentral nach unten gewölbten Ebene angeordnet sind.

## Claims

1. Device (30) for melting adhesive, having a melting grill (2) that has a multiplicity of passage openings (20), and having heating elements (4), wherein the melting grill (2) is heatable by means of the heating elements (4) and melted adhesive (32) by means of the hot melting grill (2) is dischargeable through the passage openings (20), the melting grill (2) on that side thereof that faces the adhesive (31) to be melted having ribs (14), wherein the melting grill (2) has rods (15) that are disposed beside one another and ribs (14) that are disposed on the rods (15), the rods (15) and the ribs (14) being heatable by means of the heating elements (4), wherein ribs (14) of adjacent rods (15) are aligned so as to be directed toward one another, **characterized in that** the passage cross sections of the passage openings (20) between the rods (15) are modifiable by rotating rods (15) of the melting grill (2).

2. Device according to Claim 1, **characterized in that** the respective rod (15) and the ribs (14) that are disposed on this rod (15) are integral.

3. Device according to Claim 1 or 2, **characterized in that** the rotation axes (35) of the rods (15) are disposed so as to be mutually parallel.

4. Device according to Claim 2 or 3, **characterized in that** the ribs (14) of the respective rods (15) extend perpendicularly to the rotation axis (35) of this rod (15).

5. Device according to one of Claims 1 to 4, **characterized in that** the ribs (14) of the respective rods (15) encircle the rods (15).

6. Device according to one of Claims 1 to 5, **characterized in that** the respective rib (14) is designed in such a manner that the former in a first direction has a first spacing (17) from the rotation axis (35) of the assigned rod (15), and in a second direction that is perpendicular to the first direction has a larger second spacing (18) from the rotation axis (35) of this rod (15).

7. Device according to one of Claims 1 to 6, **characterized in that** the respective rib (14) has a plurality of rib ends, in particular four rib ends, that are curved in a radially outward manner.

8. Device according to one of Claims 1 to 7, **characterized in that** the respective rib (14) in a connection region to this assigned rod (15) has a maximum material thickness in the direction of the rotation axis (35) of the rod (15), in particular widens in a conical manner in the direction of the rod (15).

9. Device according to one of Claims 1 to 8, **characterized in that** the rib arrangement of a rod (15) and the rib arrangement of that rod (15) that is adjacent to the former rod (15) is of such a manner that the respective rib (14) of the one rod (15) engages in an intermediate space that is formed between two adjacent ribs (14) of the other rod (15), the ribs (14) of adjacent rods (15) in particular being disposed so as to be offset by half a rib spacing.

10. Device according to one of Claims 1 to 9, **characterized in that** rods (15), in particular all rods (15), of the melting grill (2) are rotatable, in particular are rotatable in a coupled identical manner.

11. Device according to one of Claims 6 to 10, **characterized in that** the rods (15) are rotatable in such a manner that in a first terminal position of the respective rod (15) the ribs (14) of the latter in relation to the second direction of the former are disposed so as to be horizontal, and in a second terminal position of this rod (15) the ribs (14) of the latter in relation to the second direction of the former are disposed so as to be vertical.

12. Device according to one of Claims 1 to 11, **characterized in that** the rods (15) are fixable in defined rotary positions.

13. Device according to one of Claims 1 to 12, **characterized in that** said device has a container (1) having the melting grill (2) disposed therein, wherein a passage opening between a lateral container wall (29) and the arrangement of a rod (15) and ribs (14) that is adjacent to said lateral container wall (29) is coverable by means of a cover (22), or the lateral container wall (29) is provided with ribs (21) that are directed toward this rod (15).

14. Device according to one of Claims 1 to 13, **characterized in that** the rods (15) receive the heating elements (4) and the heating of the ribs (14) is performed by thermal conduction by way of the rods (15), temperature probes (25) that are connected to a controller (10) and detect the temperatures of the rods (15) being provided.

15. Device according to one of Claims 1 to 4, **characterized in that** the rods (15) are disposed in a straight plane or in a kinked plane or in a curved plane, in particular in a plane that is centrally kinked downward or in a plane that is centrally curved downward.

## Revendications

1. Dispositif (30) destiné à faire fondre un agent adhésif, avec une grille pour fusion (2) comportant une pluralité d'orifices de passage (20) et avec des éléments chauffants (4), la grille pour fusion (2) pouvant être chauffée au moyen des éléments chauffants (4) et au moyen de la grille pour fusion (2) chaude, de l'agent adhésif (32) fondu pouvant être évacué à travers les orifices de passage (20), et sur son côté faisant face à l'agent adhésif (31) qu'il s'agit de faire fondre, la grille pour fusion (2) comportant des nervures (14), la grille pour fusion (2) comportant des barres (15) placées côte à côte, ainsi que des nervures (14) placées sur les barres (15), et les barres (15) et les nervures (14) pouvant être chauffées au moyen des éléments chauffants (4), sachant que des nervures (14) de barres (15) voisines sont orientées les unes vers les autres, **caractérisé en ce que** par rotation de barres (15) de la grille pour fusion (2), les sections transversales de passage des orifices de passage (20) entre les barres (15) sont variables.

2. Dispositif selon la revendication 1, **caractérisé en ce que** la barre (15) respective et les nervures (14) placées sur ladite barre (15) sont formées en monobloc.

3. Dispositif selon la revendication 1 ou 2, **caractérisé en ce que** les axes de rotation (35) des barres (15) sont placés à la parallèle les uns des autres.

4. Dispositif selon la revendication 2 ou 3, **caractérisé en ce que** les nervures (14) des barres (15) respectives s'étendent à la perpendiculaire de l'axe de rotation (35) de ladite barre (15).

5. Dispositif selon l'une quelconque des revendications 1 à 4, **caractérisé en ce que** les nervures (14) des barres (15) respectives tournent autour des barres (15).

6. Dispositif selon l'une quelconque des revendications 1 à 5, **caractérisé en ce que** la nervure (14) respective est conçue de telle sorte que dans une première direction, elle présente un premier écart (17) par rapport à l'axe de rotation (35) de la barre (15) associée et que dans une deuxième direction, perpendiculaire à la première direction, elle présente un deuxième écart (18) plus important par rapport à l'axe de rotation (35) de ladite barre (15).

7. Dispositif selon l'une quelconque des revendications 1 à 6, **caractérisé en ce que** la nervure (14) respective comporte plusieurs, notamment quatre extrémités de nervure recourbées vers l'extérieur en direction radiale.

8. Dispositif selon l'une quelconque des revendications 1 à 7, **caractérisé en ce que** dans une zone d'assemblage avec la barre (15) qui lui est associée, la nervure (14) respective présente une épaisseur maximale dans la direction de l'axe de rotation (35) de la barre (15), notamment s'élargit sous forme conique dans la direction de la barre (15).

9. Dispositif selon l'une quelconque des revendications 1 à 8, **caractérisé en ce que** l'agencement des nervures d'une barre (15) et l'agencement des nervures de la barre (15) voisine de ladite barre (15) est telle que la nervure (14) respective de l'une des barres (15) s'engage dans un espace intermédiaire créé entre deux nervures (14) voisines de l'autre barre (15), notamment que les nervures (14) de barres (15) voisines soient placées avec un décalage mutuel de la valeur d'un demi-écart entre les nervures.

10. Dispositif selon l'une quelconque des revendications 1 à 9, **caractérisé en ce que** des barres (15), notamment toutes les barres (15) de la grille pour fusion (2) sont rotatives, notamment rotatives à l'identique en couplage.

11. Dispositif selon l'une quelconque des revendications 6 à 10, **caractérisé en ce que** les barres (15) sont rotatives de telle sorte que dans une première position extrême de la barre (15) respective, ses nervures (14) soient placées à l'horizontale par rapport à sa deuxième direction et dans une deuxième position extrême de ladite barre (15), ses nervures (14) soient placées à la verticale par rapport à sa deuxième direction.

12. Dispositif selon l'une quelconque des revendications 1 à 11, **caractérisé en ce que** les barres (15) peuvent être immobilisées dans des positions en rotation définies.

13. Dispositif selon l'une quelconque des revendications 1 à 12, **caractérisé en ce qu'**il comporte un conteneur (1) avec des grilles pour fusion (2) placées dans celui-ci, un orifice de passage entre une paroi latérale (29) du conteneur et l'agencement de barre (15) et de nervures (14) adjacent à celle-ci pouvant être couvert par un couvercle (22) ou la paroi latérale (29) du conteneur étant munie de nervures (21) dirigées vers ladite barre (15).

14. Dispositif selon l'une quelconque des revendications 1 à 13, **caractérisé en ce que** les barres (15) réceptionnent les éléments chauffants (4) et le chauffage des nervures (14) s'effectue par conduction thermique par l'intermédiaire des barres (15), et des sondes thermiques (25) connectées à un système de commande (10) qui détectent les températures des barres (15) sont prévues.

15. Dispositif selon l'une quelconque des revendications 1 à 4, **caractérisé en ce que** les barres (15) sont placées dans un plan rectiligne ou dans un plan plié ou dans un plan recourbé, notamment dans un plan plié au centre vers le bas ou dans un plan recourbé au centre vers le bas.
